# EUROPEAN PATENT APPLICATION

(11) **EP 3 246 226 A1**
(43) Date of publication of application: **22.11.2017**
(21) Application number: 16737294.5
(22) Date of filing: 08.01.2016
(51) Int. Cl.: B62D 1/19, B62D 1/185

(54) **STEERING DEVICE**

(30) Priority: 16.01.2015 JP 2015006773
(71) Applicant: JTEKT Corporation, Osaka-shi, Osaka 542-8502 (JP)
(72) Inventor: SAKUDA, Masayoshi, Osaka-shi Osaka 542-8502 (JP); KUWAHARA, Kazuyuki, Osaka-shi Osaka 542-8502 (JP)
(74) Representative: Winter, Brandl, Fürniss, Hübner, Röss, Kaiser, Polte - Partnerschaft mbB
(86) International application number: PCT/JP2016/050432
(87) International publication number: WO 2016/114223

(57) **Abstract**

A column jacket includes an inner jacket and an outer jacket formed with a slit and elastically reducible in diameter. A clamp mechanism causes the outer jacket to clamp the inner jacket so that the inner jacket is unable to move in an axial direction X by clamping a pair of clamp target portions of the outer jacket. The slit extends from an open end formed at a jacket end of the outer jacket to a closed end located at a predetermined position of the outer jacket in the axial direction. The slit includes a meandering portion that meanders in a wave-like manner in a circumferential direction between the open end and the closed end.

## Description

### Technical Field

An aspect of the present invention relates to a steering device.

### Background Art

A steering column device has been proposed which is equipped with a clamp device for clamping an inner column so that it is rendered unable to move in the axial direction relative to an outer column by reducing the diameter of the outer column which is formed with an axial slit extending straightly in the axial direction.

### Prior Art Documents

### Patent Documents

Patent document 1: JP-B2-4876917

### Summary of the Invention

### Problems to Be Solved by the Invention

If the slit width of the axial slit is increased in the circumferential direction of the outer column, although the outer column is rendered more bendable, the circumferential length of the portion, in contact with the inner column, of the outer column is made shorter, as a result of which the clamp maintaining force to act on the inner jacket may be weakened.

An object of an aspect of the present invention is to provide a steering device in which adjustment can be made easily between the bendability of an outer jacket and the strength of a clamp maintaining force.

### Means for Solving the Problems

According to a first aspect of the invention, a steering device (1, 1Q) is includes a column jacket (8, 8Q) which supports a steering shaft (3) rotatably and includes a cylindrical inner jacket (11, 11Q) and a cylindrical outer jacket (12, 12Q) that is fitted with the inner jacket so as to be slidable relative to the inner jacket in the axial direction (X) and is formed with a slit (40, 40Q) and is thereby reducible in diameter elastically; and a clamp mechanism (18) which causes the outer jacket to clamp the inner jacket so that the inner jacket is rendered unable to move in the axial direction by clamping a pair of clamp target portions (19, 19Q) that are integral with the outer jacket, wherein the slit extends from an open end (41) formed at a jacket end (12e) of the outer jacket to a closed end (42) located at a predetermined position of the outer jacket in the axial direction and includes a meandering portion (43) that meanders in a wave-like manner between the open end and the closed end so as to turn aside in the circumferential direction (Z).

The parenthesized alphanumeric symbols denote components etc. employed in the embodiments (described later). However, naturally, this does not mean that the invention should be construed as being restricted by those embodiments. This applies throughout this section.

In a second aspect of the invention, the meandering portion includes plural regions (A1-A3) which may include regions (A1 and A2) that are different from each other in at least one of a wave pitch (P), a wave amplitude (H), and a slit width (W) in a direction that is perpendicular to the longitudinal direction of the slit.

In a third aspect of the invention, the regions that are different from each other in at least one of the pitch, the amplitude, and the slit width may include a first region (A1) located between the pair of clamp target portions and a second region (A2) located closer to the closed end than the first region is.

In a fourth aspect of the invention, a wave amplitude (H2) in the second region may be set longer than a circumferential interval (B) between the pair of clamp target portions of the outer jacket (H2 > B).

In a fifth aspect of the invention, the outer jacket may include an attachment portion (50) that is located on the lower side of the closed end in the axial direction and serves for attachment of an attachment subject component.

### Advantages of the Invention

In the first aspect of the invention, the slit includes the meandering portion which meanders in a wave-like manner so as to turn aside in the circumferential direction. The use of the meandering portion which is high in the degree of freedom of shape setting makes it possible to secure a necessary clamp maintaining force to act on the inner jacket while adjusting the bendability of the outer jacket.

According to the second aspect of the invention, since the meandering portion includes regions that are different from each other in at least one of the wave pitch, the wave amplitude, and the slit width, the degrees of freedom of the setting of the bendability of the outer jacket and the setting of a clamp maintaining force to act on the inner jacket are increased.

According to the third aspect of the invention, bendability adjustment and adjustment of the clamp maintaining force to act on the inner jacket can be made easily by the portion between the pair of clamp target portions and the portion located on the lower side of the former portion in the axial direction.

According to the fourth aspect of the invention, it is made easier to reduce the diameter of the outer jacket. Furthermore, in the outer jacket, the degree of freedom of layout can be increased; for example, the axial length of the region that is located on the lower side of the pair of clamp target portions in the axial direction and in which part of the meandering portion is formed can be shortened.

More specifically, as in the fifth aspect of the invention, the outer jacket can be formed with the attachment portion for attachment of an attachment subject component on the lower side of the closed end in the axial direction. The space can thus be utilized effectively.

### Brief Description of the Drawings

[Fig. 1] Fig. 1 is a schematic, partially cutaway side view showing a general configuration of a steering device according to a first embodiment of the present invention.
[Fig. 2] Fig. 2 is a rough perspective view of the steering device according to the first embodiment.
[Fig. 3] Fig. 3 is a rough sectional view of the steering device according to the first embodiment and corresponds to a sectional view taken along line III-III in Fig. 1.
[Fig. 4] Fig. 4 is a bottom view, as viewed from below in a tilt direction, of an essential part of the steering device according to the first embodiment.
[Fig. 5] Fig. 5 is a rough sectional view of a steering device according to a second embodiment of the invention.

### Modes for Carrying Out the Invention

Embodiments of the present invention will be described with reference to the drawings.

### (Embodiment 1)

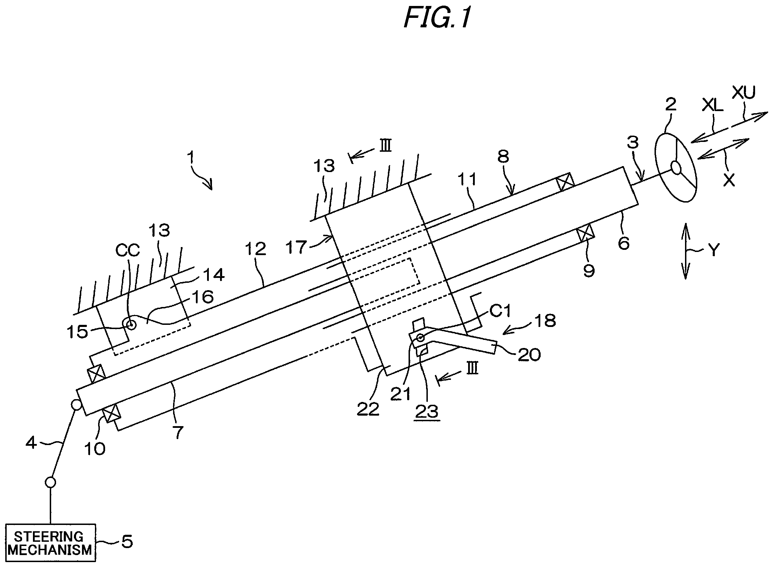

Fig. 1 is a schematic, partially cutaway side view showing a general configuration of a steering device according to an embodiment of the invention. As shown in Fig. 1, the steering device 1 is equipped with a steering shaft 3 to one end (the top end in its axial direction) of which a steering member 2 such as a steering wheel is connected and a steering mechanism 5 which is connected to the steering shaft 3 via an intermediate shaft 4 etc.

The steering mechanism 5 is, for example, a rack-and-pinion mechanism that steers steered wheels (not shown) in link with a steering manipulation on the steering member 2. Rotation of the steering member 2 is transmitted to the steering mechanism 5 via the steering shaft 3, the intermediate shaft 4, etc. The rotation transmitted to the steering mechanism 5 is converted into a movement in the axial direction of a rack shaft (not shown) and the steered wheels are thereby steered.

The steering shaft 3 has a cylindrical upper shaft 6 and lower shaft 7 which are fitted with each other by for example, spline fitting or serration fitting so as to be slidable relative to each other. The steering member 2 is connected to one end of the upper shaft 6. The steering shaft 3 can expand and contract in the axial direction X.

The steering device 1 is equipped with a hollow column jacket 8 which supports the steering shaft 3 rotatably. The steering shaft 3 is inserted in the column jacket 8 and supported rotatably by the column jacket 8 via plural bearings 9 and 10.

The column jacket 8 has a cylindrical inner jacket 11 (e.g., upper jacket) and a cylindrical outer jacket 12 (e.g., lower jacket) which are fitted with each other so as to be slidable relative to each other. The column jacket 8 can expand and contract in the axial direction X. The upper, inner jacket 11 is connected to the upper shaft 6 via the bearing 9 so as to be able to move together with the upper shaft 6 in the axial direction X. The lower, outer jacket 12 supports the lower shaft 7 rotatably via the bearing 10.

The steering device 1 is equipped with a fixing bracket 14 which is fixed to a vehicle body 13, a tilt center shaft 15 which is supported by the fixing bracket 14, and a column bracket 16 which is fixed to the outer circumferential surface of the outer jacket 12 and are supported rotatably by the tilt center shaft 15. The column jacket 8 and the steering shaft 3 can be swung (tilted) in the tilt direction Y with the tilt center CC (the center axis of the tilt center shaft 15) as a supporting point.

The position of the steering member 2 can be adjusted by swinging (tilting) the steering shaft 3 and the column jacket 8 about the tilt center CC (what is called a tilt adjustment). The position of the steering member 2 can also be adjusted by expanding or contracting the steering shaft 3 and the column jacket 8 in the axial direction X (what is called a telescopic adjustment).

The steering device 1 is equipped with a clamp mechanism 18 for attaining tilt locking and telescopic movement locking by clamping together a bracket 17 which is fixed to the vehicle body 13 and a pair of clamp target portions 19 (clamp target side plates) which are integral with the outer jacket 12.

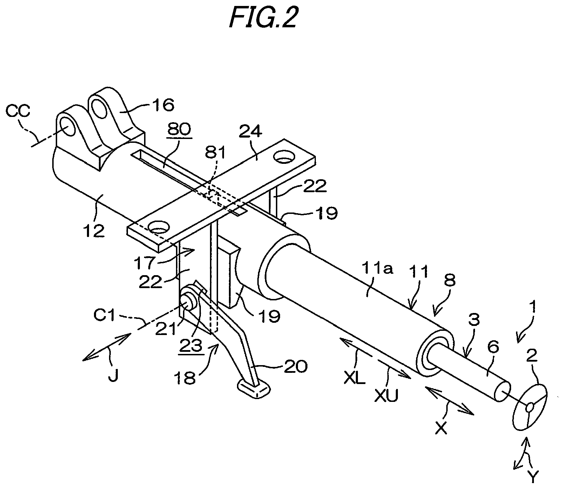

As shown in Fig. 1 and Fig. 2 which is a rough perspective view, the clamp mechanism 18 is equipped with a manipulation lever 20 which is a manipulation member to be manipulated rotationally by a driver and a fastening shaft 21 which can rotate together with the manipulation lever 20. The center axis C1 of the fastening shaft 21 coincides with the rotation center of the manipulation lever 20.

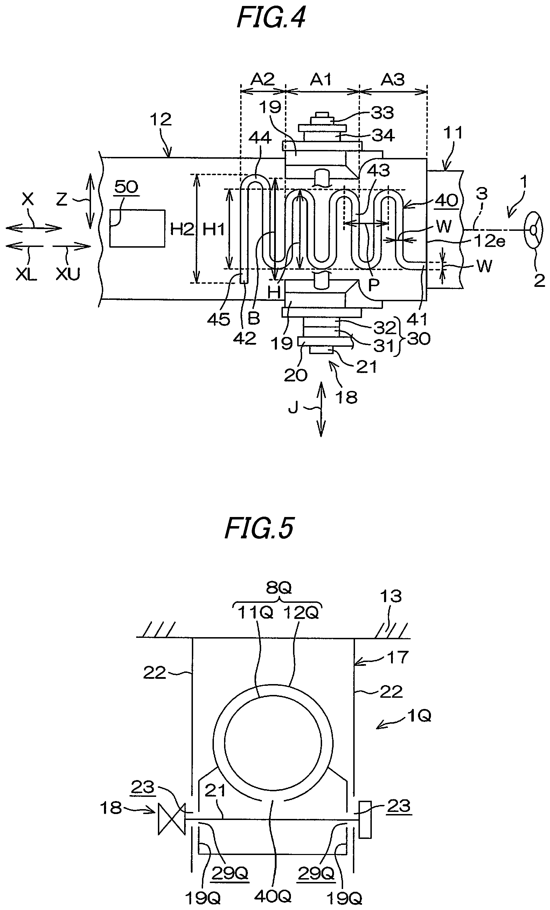

As shown in Fig. 4 which is a rough bottom view, the outer jacket 12 is formed with a slit 40, whereby the diameter of the outer jacket 12 can be reduced elastically.

The slit 40 extends from an open end 41, formed at a jacket end 12e, of the outer jacket 12 to a closed end 42 which is located at a predetermined position in the axial direction X of the outer jacket 12. The slit 40 includes a meandering portion 43 which is located between the open end 41 and the closed end 42 and meanders in a wave-like manner so as to turn aside in the circumferential direction Z. In the embodiment, the meandering portion 43 extends from the open end 41 to the closed end 42.

The pair of clamp target portions 19 of the outer jacket 12 are opposed to each other in a fastening axis direction J which is the axial direction of the fastening shaft 21. The pair of clamp target portions 19 are disposed on the two respective sides of a middle portion of the meandering portion 43.

The meandering portion 43 includes a first region A1, a second region A2, and a third region A3 which are arranged in its longitudinal direction. The first region A1 is located between the pair of clamp target portions 19. The second region A2 is located on the lower side (i.e., on the closed end 42 side) of the first region A1 in the axial direction X. The third region A3 is located on the upper side (i.e., on the open end 41 side) of the first region A1 in the axial direction X.

A wave amplitude H2 in the second region A2 is larger than a wave amplitude H1 in the first region A1. Although the embodiment will be described for the case that the first region A1 and the second region A2 are different from each other in wave amplitudes H, the invention is not limited this case. It suffices that the first region A1 and the second region A2 be different from each other in at least one of the wave pitch P, the wave amplitude H, and the slit width W in the direction that is perpendicular to the longitudinal direction of the slit 40.

A wave amplitude H2 in the second region A2 is longer than a circumferential interval B between the pair of clamp target portions 19 of the outer jacket 12 (H2 > B). That is, the meandering portion 43 includes portions 44 and 45 which are located on the lower side (indicated by symbol XL) of the pair of clamp target portions 19 in the axial direction of the outer jacket 12 and outside the portion between the pair of clamp target portions 19 of the outer jacket 12 in the circumferential direction Z.

The outer jacket 12 includes an attachment portion 50 which is located on the lower side (indicated by symbol XL) of the closed end 42 and serves for attachment of an attachment subject component. The attachment portion 50 may be an attachment hole for attachment of a key-locking device (attachment subject component) or a column cover attachment bracket (attachment subject component).

As shown in Fig. 2, the clamp mechanism 18 attains tilt locking by fastening the bracket 17 to the pair of clamp target portions 19 of the outer jacket 12 via the fastening shaft 21.

The clamp mechanism 18 attains telescopic movement locking by rendering the inner jacket 11 unable to move in the axial direction X by means of the outer jacket 12 whose diameter is reduced by clamping the pair of clamp target portions 19 of the outer jacket 12, whereby the position of the steering member 2 is fixed with respect to the vehicle body 13 (see Fig. 1).

The fastening shaft 21 is inserted through tilt long holes 23 which are formed through a pair of side plates 22 (only one of them is shown in Fig. 1) of the bracket 17 so as to extend in a tilt direction Y, respectively.

As shown in Fig. 2, the outer jacket 12 is formed with a long hole 80 which extends in the axial direction X. The inner jacket 11 is provided with, at its bottom end in the axial direction X, an engagement portion 81 which is engaged with the long hole 80. The engagement between the long hole 80 and the engagement portion 81 prevents rotation of the inner jacket 11 with respect to the outer jacket 12. Guided by the long hole 80 during a telescopic adjustment or impact absorption, the engagement portion 81 moves toward the lower side in the axial direction X together with the inner jacket 11.

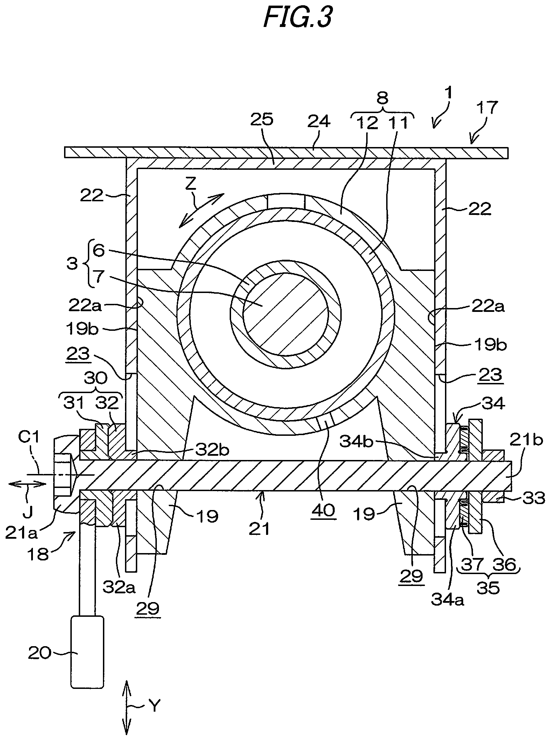

Fig. 3 is a sectional view taken along line III-III in Fig. 1. As shown in Fig. 3, the bracket 17 has an attachment plate 24 which is attached to the vehicle body 13, a top plate 25 which extends parallel with and is fixed to the attachment plate 24, and the pair of side plates 22 which extend downward in the tilt direction Y from the two respective ends of the top plate 25.

The pair of clamp target portions 19 of the outer jacket 12 are disposed between the pair of side plates 22 and shaped like plates so as to extend parallel with inner side surfaces 22a of the side plates 22, respectively. The inner side surfaces 22a of the side plates 22 are opposed to outer side surfaces 19b of the clamp target portions 19, respectively.

The clamp target portions 19 of the outer jacket 12 are formed with circular fastening shaft insertion holes 29 through which the fastening shaft 21 is inserted. Th fastening shaft 21, the outer jacket 12, the inner jacket 11, and the steering shaft 3 move together in the tilt direction Y during a tilt adjustment.

The fastening shaft 21 is a bolt that is inserted through the tilt long holes 23 of the two side plates 22 of the bracket 17 and the fastening shaft insertion holes 29 of the two clamp target portions 19 of the outer jacket 12. A large-diameter head portion 21a, located at its one end, of the fastening shaft 21 is fixed to the manipulation lever 20 so as to be rotatable together with it.

The clamp mechanism 18 is further equipped with a force conversion mechanism 30 which is interposed between the head portion 21 a of the fastening shaft 21 and one side plate 22 and serves to convert manipulation torque of the manipulation lever 20 into an axial force for the fastening shaft 21 (i.e., a fastening force for fastening the pair of side plates 22).

The force conversion mechanism 30 includes a rotary cam 31 which is connected to the manipulation lever 20 so as to be rotatable together with it and is prevented from moving relative to the fastening shaft 21 in the fastening axis direction J and one clamp member 32 which is a non-rotary cam that is cam-engaged with the rotary cam 31 and serves to fasten the one side wall 22.

The clamp mechanism 18 is still further equipped with a nut 33 which is threadedly engaged with a screw portion 21b formed at the other end of the fastening shaft 21, the other clamp member 34 for fastening the other side plate 22, and an intervening member 35 which intervenes between the other clamp member 34 and the nut 33.

The intervening member 35 has a washer 36 which intervenes between the nut 33 and the other clamp member 34 and a needle-shaped roller bearing 37 which intervenes between the washer 36 and the other clamp member 34.

The other clamp member 34 and the intervening member 35 intervene between the nut 33 and the other side plate 22 of the bracket 17. The rotary cam 31, the one clamp member 32 (non-rotary cam), the other clamp member 34, and the intervening member 35 are supported by the outer circumferential surface of the fastening shaft 21.

Each of the one clamp member 32 (non-rotary cam) and the other clamp member 34 has a clamp plate portion 32a or 34a for fastening the associated side plate 22 and a boss portion 32b or 34b which is fitted in the associated tilt long hole 23. Rotation of each of the clamp members 32 and 34 is prevented by the fitting of the boss portion 32b or 34b in the associated tilt long hole 23.

The one clamp member 32 (non-rotary cam) and the other clamp member 34 are supported by the fastening shaft 21 so as to be movable in the fastening axis direction J.

When the rotary cam 31 is rotated relative to the one clamp member 32 (non-rotary cam) as the manipulation lever 20 is rotated in the locking direction, the one clamp member 32 is moved in the fastening axis direction J, whereby the pair of side walls 22 of the bracket 17 are clamped and fastened between (the clamp plate portions 32a and 34a of) the two clamp members 32 and 34.

In this manner, the side walls 22 of the bracket 17 fasten the respective clamp target portions 19 of the outer jacket 12. As a result, movement of the outer jacket 12 in the tilt direction Y is prevented and tilt locking is attained. Furthermore, the fastening of the two clamp target portions 19 causes the outer jacket 12 to be reduced in diameter elastically, whereby the outer jacket 12 compresses the inner jacket 11. In this manner, movement of the inner jacket 11 in the axial direction X is prevented and telescopic movement locking is attained.

In the embodiment, as shown in Fig. 4, the slit 40 includes the meandering portion 43 which meanders in a wave-like manner so as to turn aside in the circumferential direction Z. The use of the meandering portion 43 which is high in the degree of freedom of shape setting makes it possible to secure a necessary clamp maintaining force to act on the inner jacket 11 while adjusting the bendability of the outer jacket 12.

In the conventional case in which the outer jacket is formed with the slit that extends straightly in the axial direction, if the outer jacket is made more bendable by increasing the slit width in the circumferential direction of the outer jacket, the circumferential length of the portion, to clamp the inner jacket, of the outer jacket is made shorter, which raises a problem that the clamp maintaining force to act on the inner jacket is weakened. In contrast, in the embodiment, the use of the meandering portion 43 makes it possible attain both of high bendability of the outer jacket 12 and a strong clamp maintaining force to act on the inner jacket 11.

That is, with the meandering portion 43, necessary bendability of the outer jacket 12 can be secured even in a case that the circumferential length of the portion, to clamp the inner jacket 11, of the outer jacket 12 is increased to secure a necessary clamp maintaining force to act on the inner jacket 11.

Furthermore, the wave amplitude H2 in the second region A2 which is a partial region of the meandering portion 43 is set different from the amplitude H1 in the first region A1 which is another region of the meandering portion 43. This measure increases the degrees of freedom of the setting of the bendability of the outer jacket 12 and the setting of a clamp maintaining force to act on the inner jacket 11.

This will be described below more specifically. In the outer jacket 12, the portion located on the lower side (indicated by symbol XL), in the axial direction, of the portion located between the pair of clamp target portions 19 tends to be less bendable than the portion located between the pair of clamp target portions 19. However, the bendability of the portion located on the lower side (indicated by symbol XL) in the axial direction can be increased by adjusting various parameters of the slit 40.

On the other hand, a necessary clamp maintaining force to act on the inner jacket 11 can be secured by increasing the circumferential length of the portion, located between the pair of clamp target portions 19 and serving to clamp the inner jacket 11, of the outer jacket 12 by adjusting various parameters of the slit 40. Furthermore, the outer jacket 12's resistance to a bending force acting on the steering member 2 side end of the inner jacket 11 can be increased. Still further, in the event of a secondary collision, the column jacket 8 is shortened satisfactorily to enable proper absorption of resulting impact.

The wave amplitude H2 in the second region A2 is set longer than the circumferential interval B between the pair of clamp target portions 19 of the outer jacket 12 (H2 > B).

That is, the meandering portion 43 includes the portions 44 and 45 which are located on the lower side (indicated by symbol XL), that is, on the closed end 42 side, of the pair of clamp target portions 19 in the axial direction of the outer jacket 12 and outside the portion between the pair of clamp target portions 19 of the outer jacket 12 in the circumferential direction Z. This measure makes it possible to reduce the diameter of the outer jacket 12 more easily. Furthermore, in the outer jacket 12, the degree of freedom of layout can be increased; for example, the length in the axial direction X of the region (corresponding to the second region A2) that the meandering portion 43 is located on the lower side (indicated by symbol XL) of the pair of clamp target portions 19 in the axial direction can be shortened.

More specifically, in the outer jacket 12, it becomes substantially possible to form the attachment portion 50 for attachment of an attachment subject component (e.g., an attachment hole for attachment to a key-locking device or a column cover attachment bracket) on the lower side (indicated by symbol XL) of the closed end 42 in the axial direction. The space thus can be utilized effectively.

### (Embodiment 2)

Fig. 5 is a rough sectional view of a steering device 1Q according to a second embodiment of the invention. The steering device 1Q according to the second embodiment shown in Fig. 5 is different from the steering device 1 according to the first embodiment shown in Fig. 3 mainly in what will be described below.

As shown in Fig. 5, a column jacket 8Q includes a lower-side inner jacket 11Q and an upper-side outer jacket 12Q having a slit 40Q. A telescopic adjustment is performed by sliding the outer jacket 12Q in the axial direction relative to the inner jacket 11Q. The slit 40Q has the same structure as the slit 40 employed in the first embodiment (see Figs. 3 and 4).

A clamp mechanism 18 causes side plates 22 which is fixed to a vehicle body 13 to clamp a pair of clamp target portions 19Q (corresponding to clamp target side plates) which are integral with the outer jacket 12Q. Fastening shaft insertion holes 29Q which are formed through the respective clamp target portions 19Q and through which a fastening shaft 21 is inserted are long holes that extend in the telescopic movement direction (i.e., the axial direction of the column jacket 8Q, that is, the direction perpendicular to the paper surface of Fig. 5).

The components of the second embodiment shown in Fig. 5 having the same ones in the first embodiment shown in Fig. 3 are given the same reference symbols as the latter. The second embodiment can provide the same workings and advantages as the first embodiment.

The invention is not limited to the above embodiments. For example, the wave pitch P may be shorter in the second region A2 than in the first region A1 and the slit width W may be wider in the second region A2 than in the first region A1 (these features are not shown in any drawings).

The wave amplitude H may be smaller in the third region A3 than in the first region A1 (this feature is not shown in any drawings). The wave pitch P may be longer in the third region A3 than in the first region A1. The slit width W may be wider in the third region A3 than in the first region A1 (this feature is not shown in any drawings).

In the outer jacket 12 shown in Fig. 4, its portion located on the upper side (indicated by symbol XU) of the pair of clamp target portions 19 in the axial direction may be omitted. In this case, the third region A3 is also omitted.

Although not shown in any drawings, the invention can also be applied to a steering device capable of only telescopic adjustment (i.e., tilt adjustment is not performed). In the invention, various other modifications are possible without departing from the scope of the claims.

The present application is based on Japanese Patent Application No. 2015-006773 filed on January 16, 2015, the disclosure of which is incorporated herein by reference.

### Description of Symbols

1, 1 Q ... Steering device; 3 ... Steering shaft; 8, 8Q ... Column jacket; 11, 11 Q ... Inner jacket; 12, 12Q ... Outer jacket; 12e ... Jacket end; 17 ... Bracket; 18 ... Clamp mechanism; 19, 19Q ... Clamp target portion; 20 ... Manipulation lever; 21 ... Fastening shaft; 22 ... Side plate; 23 ... Tilt long hole; 40, 40Q ... Slit; 41 ... Open end; 42 ... Closed end; 43 ... Meandering portion; 44, 45 ... Portion; 50 ... Attachment portion; A1 ... First region; A2 ... Second region; A3 ... Third region; B ... Circumferential interval; H, H1, H2 ... Amplitude; J ... Fastening axis direction; P ... Pitch; W ... Slit width; X ... Axial direction (telescopic movement direction); XL ... Lower side in axial direction; XU ... Upper side in axial direction; Y ... Tilt direction; Z ... Circumferential direction.

## Claims

1. A steering device comprising:
a column jacket which rotatably supports a steering shaft and includes a cylindrical inner jacket and a cylindrical outer jacket that is fitted with the inner jacket so as to be slidable relative to the inner jacket in an axial direction and is formed with a slit so that the cylindrical outer jacket is elastically reducible in diameter; and
a clamp mechanism which causes the outer jacket to clamp the inner jacket so that the inner jacket is unable to move in the axial direction by clamping a pair of clamp target portions that are integral with the outer jacket,
wherein the slit extends from an open end formed at a jacket end of the outer jacket to a closed end located at a predetermined position of the outer jacket in the axial direction, and the slit includes a meandering portion that meanders in a wave-like manner in the circumferential direction between the open end and the closed end.

2. The steering device according to claim 1, wherein the meandering portion includes a plurality of regions which include regions that are different from each other in at least one of a wave pitch, a wave amplitude, and a slit width in a direction perpendicular to a longitudinal direction of the slit.

3. The steering device according to claim 2, wherein the regions that are different from each other in at least one of the pitch, the amplitude, and the slit width include a first region located between the pair of clamp target portions and a second region located closer to the closed end than the first region.

4. The steering device according to claim 3, wherein the wave amplitude in the second region is longer than a circumferential interval between the pair of clamp target portions of the outer jacket.

5. The steering device according to claim 4, the outer jacket includes an attachment portion that is located on a lower side of the closed end in the axial direction and serves for attachment of an attachment subject component.
